# EUROPEAN PATENT APPLICATION

(11) **EP 4 666 874 A1**
(43) Date of publication of application: **24.12.2025**
(21) Application number: 25183945.2
(22) Date of filing: 19.06.2025
(51) Int. Cl.: A23N 15/00, A23P 20/25

(54) **PREPARATION APPARATUS AND PROCESS FOR PREPARING FOODS TO BE STUFFED SUCH AS POTATOES TO BE STUFFED**

(30) Priority: 19.06.2024 IT 202400014113
(71) Applicant: Pesce Emiliana Srl Societa' Benefit, 20129 Milano (MI) (IT)
(72) Inventor: RIVA, Carlo, 6918 Lugano-Figino (CH)
(74) Representative: Iannone, Carlo Luigi

(57) **Abstract**

The preparation device (1) according to the invention, for preparing foods to be stuffed, such as potatoes or other vegetables, fruits, or mushrooms, comprising: a) a positioning system configured for grasping and holding in place a piece of raw foodstuff to be processed (PG1); b) a processing head (90) configured for obtaining, by chip removal, in the piece of raw foodstuff to be processed (PG1) grasped by the positioning system, a filling cavity (CF) configured for containing a stuffing. The invention also relates to a process for preparing foods to be stuffed, such as potatoes or other vegetables, fruits, or mushrooms. Such device and process allow stuffed potatoes or other stuffed vegetables, fruits, or mushrooms to be prepared more quickly, with more accurate shape tolerances and by hollowing out larger cavities for the stuffing.

## Description

### Field of the invention

The present invention relates to a preparation device and a process for preparing foods to be stuffed, such as potatoes or other vegetables, fruits, or mushrooms.

Such device and such process are particularly adapted to the preparation of *jacket potatoes, baked potatoes,* or other stuffed potatoes.

### State of the art

In Anglo-Saxon countries, so-called *jacket potatoes or baked potatoes,* large stuffed potatoes usually consumed as street food, are widespread.

In order to prepare *baked potatoes or jacket potatoes,* potatoes are currently cut, usually lengthwise, by hand.

In order to stuff them with a greater amount of stuffing, they are also hollowed out with a spoon having cutting edges.

This latter operation, even though allowing the cook to make a much wider variety of recipes, it is not quick to be carried out and requires good manual skill, which extends the recipe preparation times and the customers' waiting times, and consequently the cost at which the finished dish can be sold and the operating costs of a restaurant or street food point.

Furthermore, it is difficult to manually hollow out cavities of always identical dimensions in the potatoes, and thus capable of always containing the same amount of stuffing, with the risk of complaints and criticism from customers.

Furthermore, excessively hollowing out some potatoes weakens them too much, causing them to break during the subsequent steps of preparing the dish, for example during the cooking of the foodstuff, and they must be discarded or recycled into different preparations, still increasing preparation costs and waste of time and ingredients.

An object of the present invention is to overcome the above-mentioned drawbacks and in particular to provide a device and a process for preparing stuffed potatoes, for example, but not limited to, *jacket potatoes* or *baked potatoes,* and other stuffed vegetables, fruits, or mushrooms, which resolves the previous problems of the state of the art, in particular by allowing faster preparation of stuffed potatoes or other stuffed vegetables, fruits, or mushrooms, giving the semi-finished potato, vegetable, fruit, or mushroom to be stuffed a shape that varies less from one piece to another, and by hollowing out a filling cavity in such semi-finished foodstuffs which is wider than that obtainable by simply making a longitudinal cut in the potato, vegetable, fruit, or mushroom.

### Summary of the invention

Such object is achieved, in a first aspect of the present invention, with a preparation device having the features according to claim **1.**

In a second aspect of the invention, such object is achieved by a process having the features according to claim **12.**

Further features of the invention are the object of the dependent claims.

The advantages achievable with the present invention will become more apparent to those skilled in the art from the following detailed description of a particular, non-limiting embodiment, illustrated with reference to the following schematic figures.

### List of figures

Figure **1** shows a perspective view of a preparation device according to a particular embodiment of the present invention;
Figure **2** shows a first top perspective view of the loading, unloading, cutting, and hollowing stations of the preparation device of Figure **1****;**
Figure **3** shows a second top perspective view of the loading, unloading, and cutting stations of the preparation device of Figure **1****,** where such stations are without some protective plates and cases;
Figure **4** shows a third top perspective view of the loading station of the preparation device of Figure 1, where such station is without some protective plates and cases;
Figure **5** shows a sectional view, according to an axial section plane, of a second piece of semi-finished foodstuff obtainable with the preparation device of Figure **1****;**
Figure **6** shows a sectional view, according to a section plane parallel to the plane **XZ,** of the workpiece support of the preparation device of Figure **1** and of a potato to be processed loaded on such support;
Figure **7** shows a top view, according to an observation direction parallel to the axis **Z,** of the loading and cutting stations of the preparation device of Figure **1****;**
Figure **8** shows a sectional view, according to a section plane parallel to the plane **XZ,** of the workpiece support of the preparation device of Figure **1** and of the second piece of semi-finished foodstuff loaded on such support, while the milling tool hollows the semi-finished piece;
Figure **9** shows a sectional view, according to a section plane parallel to the plane **XZ,** of the workpiece support of the preparation device of Figure **1** and of the third piece of semi-finished foodstuff loaded on such support.

### Detailed description

In the present description, the terms upper, lower, bottom, top, horizontal, and vertical, unless otherwise specified, refer to the condition of normal use of the preparation device **1.**

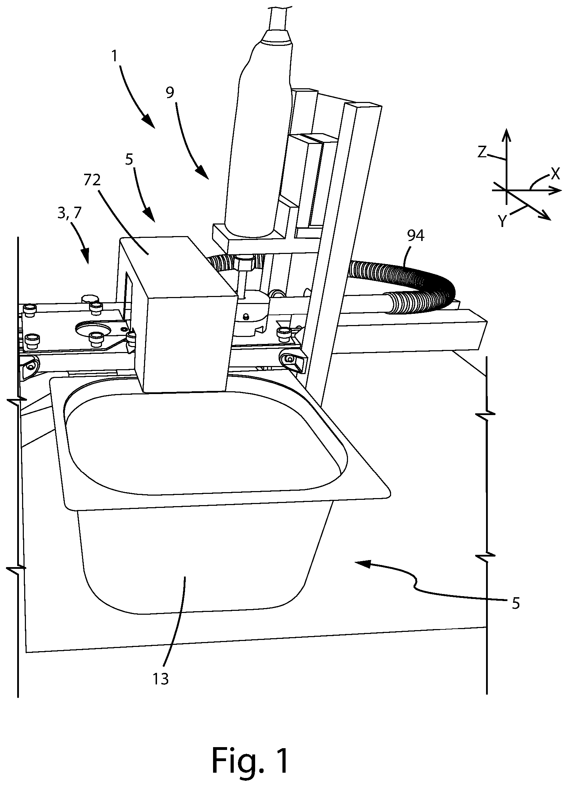

Figures **1-9** relate to a preparation device according to a particular embodiment of the present invention, referred to overall by reference number **1.**

The preparation device **1** can be used to prepare, for example, stuffed potatoes such as *jacket potatoes or baked potatoes,* other stuffed vegetables, for example aubergines, stuffed fruits, or stuffed mushrooms.

The preparation device **1** can be made, for example, as a machine preferably provided with the following processing stations: a loading station **3,** a cutting station **5,** an unloading station **7,** and a hollowing station **9** (Figure **1**).

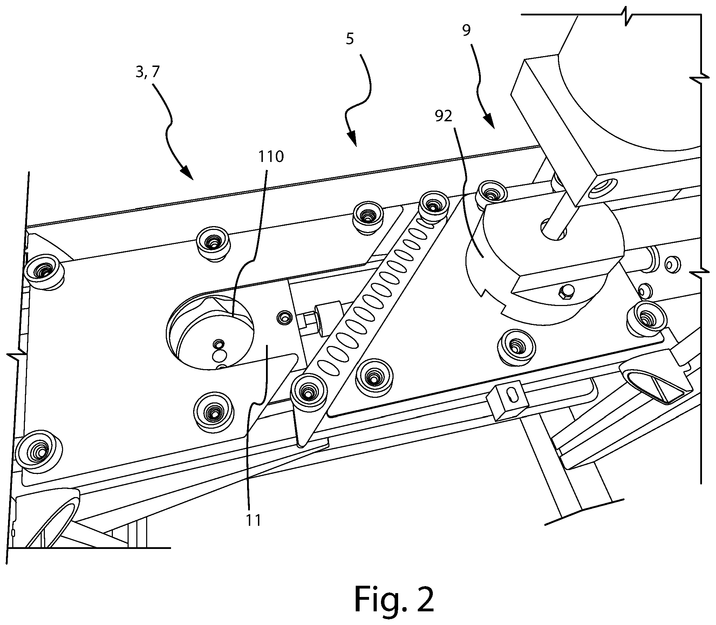

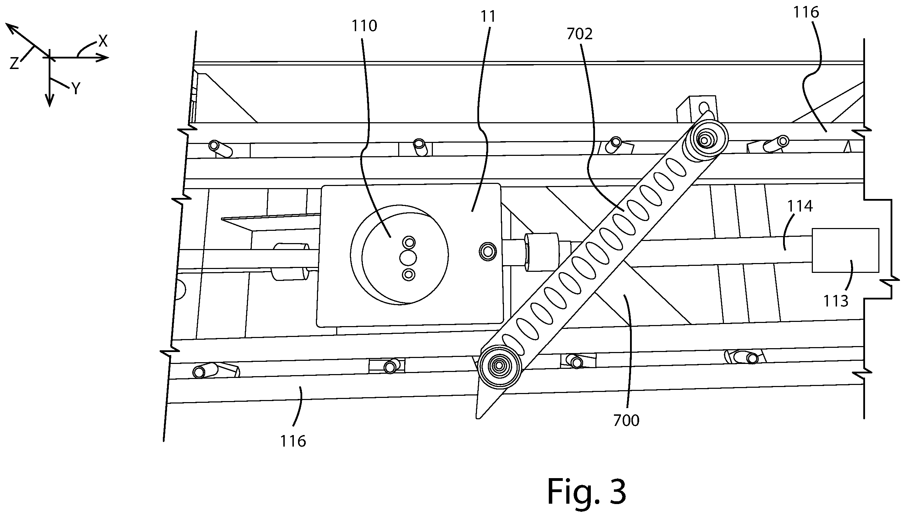

In the loading station **3,** the piece of a raw foodstuff to be processed, for example a potato, can be loaded on a workpiece support **11** and/or grasped and held by it in a predetermined position in space (Figures **2****,** **3**).

In the unloading station **7,** the piece of a semi-finished raw foodstuff **PG2** or **PG3,** for example a potato with both ends removed, for example, both caps or one cap and another end segment, can be removed from the workpiece support **11,** as will be explained in more detail later.
As in the embodiment of the preparation device **1** of the attached Figures, the loading **3** and unloading **7** stations can coincide.

In the possible cutting station **5,** the preparation device **1** is configured for removing one or more ends, for example both caps or one cap and another end segment, from a potato or other piece of a raw foodstuff to be processed **PG1** grasped by the workpiece support **11,** obtaining a first piece of semi-finished foodstuff **PG2.**

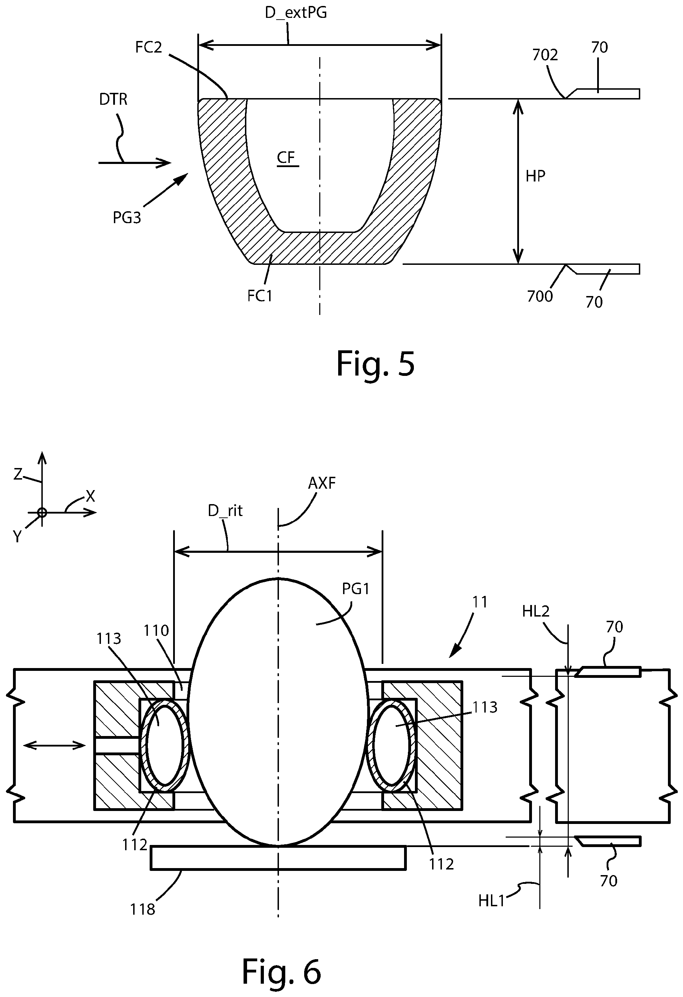

In the hollowing station **9,** the preparation device **1** is configured for hollowing out a filling cavity **CF** in the piece of a semi-finished raw foodstuff, for example in a potato **PG2** with both caps removed, grasped by the workpiece support **11,** obtaining a second piece of semi-finished foodstuff **PG3** (Figures **5****,** **8****,** **9**).

The filling cavity **CF** is configured for containing a predetermined dose of stuffing.

The second semi-finished piece **PG3** preferably has a cup, bowl, or dish shape.

The stuffing can be based, for example, on cheese, ricotta, meat, eggs, fish, vegetables, and/or other culinary preparations.

The preparation device **1** preferably comprises a bearing frame, formed, for example, by metal profiles, for example in a lattice shape, that supports or however to which are fixed the processing stations **3, 5, 7, 9,** the processing head, and the other components of the device **1.**

More generally, according to an aspect of the present invention, the preparation device **1** comprises:
- a positioning system configured for grasping and holding in place a piece of raw foodstuff to be processed PG1;
- a cutting system configured for removing one or more ends, for example both caps or one cap and another end segment, from a potato or other piece of a raw foodstuff to be processed
- a processing head **90** configured for obtaining, by chip removal, in the piece of raw foodstuff to be processed **PG1** grasped by the positioning system, a filling cavity **CF** configured for containing a stuffing.

The filling cavity **CF** is preferably blind (Figure **5**).

The processing head **90** preferably forms part of the hollowing station **9.**

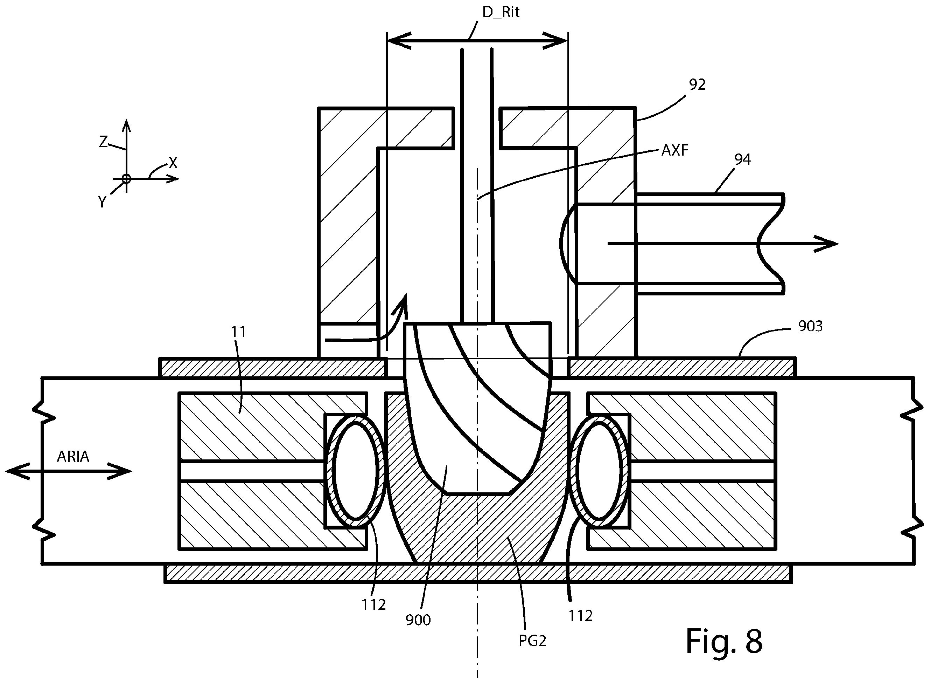

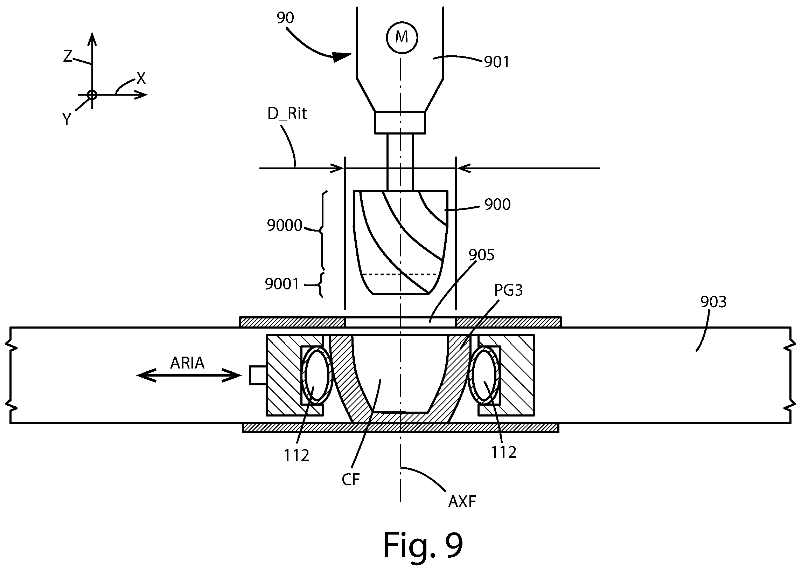

The processing head **90** is configured for obtaining the filling cavity by performing preferably one or more of the following operations: milling (Figures **8****,** **9**), drilling, for example by a helical tip, or internal turning.

For this purpose, the processing head **90** can comprise a milling tool **900** and a motor **901** configured for driving the tool **900** by rotating it around a predetermined milling axis **AXF.**

During normal operation, the **AXF** axis can be, for example, parallel or however longitudinal to the vertical axis **Z** of a Cartesian coordinate system.

The milling tool **900** comprises a plurality of cutting profiles which, rotating around the axis **AXF,** form a surface of revolution preferably having a cylindrical section **9000** and a tapered section **9001,** such as a conical, truncated-conical (Figure **9**), oval, or ogive-shaped section.
The milling tool **900** has a maximum outer diameter **D_utMax** (Figure **9**).

The tapered section **9001** is preferably in a position distal with respect to the motor **901** and to the cylindrical section **9000** (Figure **9**).

Preferably, the motor **901** is configured for rotating the milling tool **900** on itself at a speed equal to or greater than **5000** revolutions per minute, more preferably equal to or greater than **6000** revolutions per minute, and most preferably between **7000-8000** revolutions per minute.

Such high rotation speeds of the milling tool **900** make it possible to obtain chips and other scrap of potato or other processed foodstuff that are particularly small and easy to suck up from inside the suction cap **92.**

The positioning system preferably comprises the workpiece support **11,** which can in turn comprise a locking seat **110** configured for receiving the piece of raw foodstuff to be processed **PG1** or the semi-finished pieces **PG2** and **PG3** and hold them firmly in one or more predetermined positions, such as the processing positions in which they are processed or otherwise treated in the various working stations.

The locking seat **110** can be made, for example, as a cavity, either blind or through, obtained in the workpiece support **11** (Figure **5**).

To this end, at least part of the inner sides of the locking seat **110** is advantageously lined with an expandable grasping body **112,** which can be made, for example, as a reversibly inflatable and deflatable body, for example due to a pump or compressor not shown.

The expandable grasping body **112** preferably forms an internal air chamber **113,** reversibly inflatable and deflatable; for this purpose, the expandable body **112** is preferably made of a relatively soft material, such as silicone or another elastomer having a ShoreA hardness preferably equal to or lower than **40** ShoreA, and more preferably equal to or lower than **30** ShoreA, **20** ShoreA, or **10** ShoreA.

The expandable grasping body **112** preferably has an elongated shape, possibly closed on itself, such as a toroidal or however annular shape (Figure **6**).

The expandable grasping body **112** preferably extends over at least part of the inner flanks of the locking seat **110** so as to surround or however extend around the piece of raw foodstuff to be processed **PG1** inserted into the cavity **110** itself, so as to grasp and clamp the piece of raw foodstuff to be processed **PG1,** making it, for example, integral with the rest of the workpiece support **11** when the body **112** inflates and expands inwardly in the locking seat **110,** thereby restricting it.

The positioning system advantageously comprises a lower rest element **118** configured for resting, during loading, against the bottom of a potato, another root vegetable, or other raw foodstuff to be processed **PG1** inserted into the locking seat **110,** so as to determine the insertion depth of the piece **PG1** into the seat **110** and/or the vertical position **HL1, HL2** of the piece **PG1** with respect to the blades **70** or, more generally, with respect to the cutting station **5** (Figure **6**)

For this purpose, the lower rest element **118** is preferably height-adjustable.

The height adjustment allows to determine the thickness of the lower cap that is removed during the cutting step, thereby creating a flat rest surface useful for vertically positioning the stuffed potatoes during serving and/or packaging.

Preferably, the lower rest element **118** is configured for resting against the bottom part of a potato or other raw foodstuff to be processed **PG1** during loading, when the locking seat **110** is at the loading station **3.**

The lower rest element **118** can be, for example, a plate, whose upper rest surface can be either planar or non-planar.

The positioning system is advantageously configured for moving the workpiece support **11,** and a piece of raw foodstuff to be processed **PG1** possibly grasped by the support **11** and made integral with it, from one of the processing stations **3, 5, 7, 9** to another.

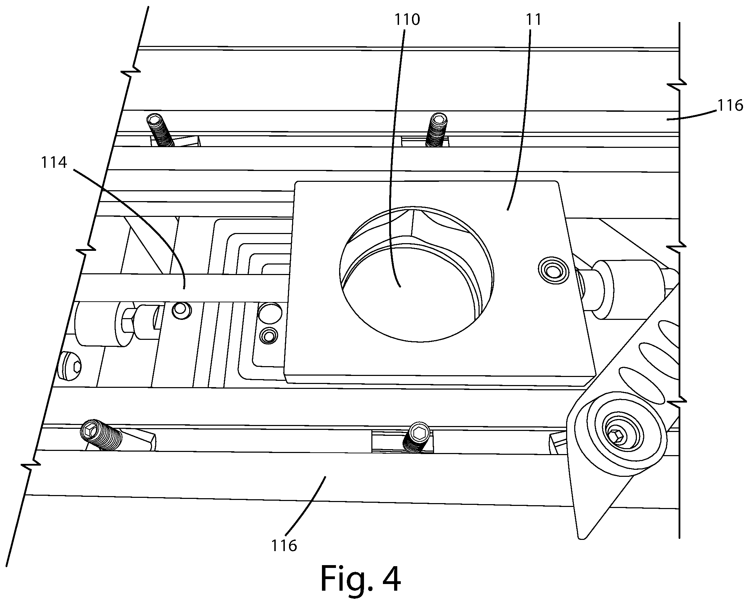

For this purpose, the positioning system can comprise a pneumatic cylinder or other linear actuator **113** and a movement rod **114** operable by the linear actuator **113** and configured for translating or rotatably translating the workpiece support **11** so as to shift and arrange it at the various processing stations **3, 5, 7, 9** (Figures **3****,** **4**).

Still for this purpose, the positioning system can comprise one or more sliding guides **116** along which the workpiece support **11** can slide being driven by the linear actuator **113.**

Such guides **116,** the linear actuator **113,** and/or more generally the positioning system are advantageously configured for moving the workpiece support **11** to the processing stations **3, 5, 7, 9** through a single, for example rectilinear, stroke (Figures **1****,** **2****,** **3****,** **7**), thus significantly simplifying the mechanical construction of machine **1** and improving both production speed and cycle time.

The cutting station **5** comprises at least one blade **70** configured for cutting away at least one end section, for example, a cap or other end piece, and more preferably at least two end sections of the piece of a potato or other raw foodstuff to be processed **PG1** grasped by the workpiece support **11.**

For this purpose, the cutting station **5** comprises at least one lower cutting edge **700** and one upper cutting edge **702** configured for cutting away, respectively, a lower end section and an upper end section of the piece of a potato or other raw foodstuff to be processed **PG1** grasped by the workpiece support **11.**

During the normal operation and use of the device **1,** the upper cutting edge **702** is positioned higher than the lower cutting edge **700.**

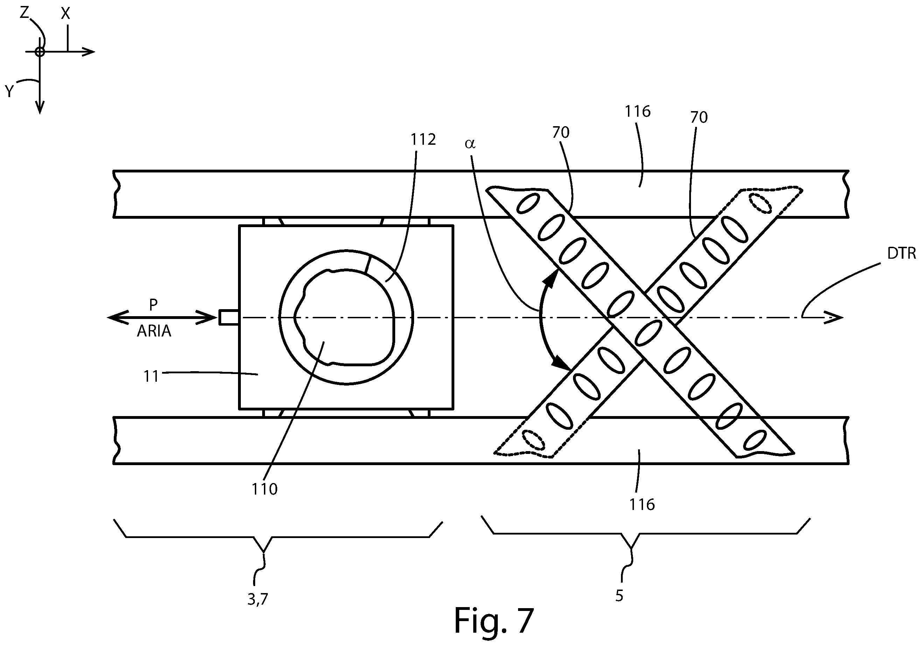

The lower **700** and upper **702** cutting edges can be formed by two separate blades **70** (Figures **3****,** **7**) or by a single blade **70.**

The lower and upper cutting edges **700** and **702** are preferably vertically spaced by a height difference **HP** equal to the height **HP** desired for the first semi-finished product **PG2** (Figure **5**).

More generally, the height difference **HP** separating the two cutting edges **700, 702** can not only be vertical but also perpendicular or otherwise transverse to the translation direction **DTR** in three-dimensional space, for example parallel to the axis **X** of the orthogonal Cartesian coordinate **XYZ** system of the attached figures, along which the workpiece support **11** translates, at least in the cutting station **5.**

The two cutting edges **700, 702** are preferably configured for cutting two substantially flat faces **FC1, FC2** in the first semi-finished product **PG2** (Figure **5**).

For this purpose, the two cutting edges **700, 702** preferably lie each in an ideal plane (Figures **3****,** **5****,** **7**).

Preferably, the two cutting edges **700, 702** are configured for coming into contact simultaneously with the first semi-finished product **PG2** during cutting (Figures **3****,** **7**).

Preferably, the two cutting edges **700, 702** are configured for exerting each a transverse thrust, but not perpendicular to the translation direction **DTR,** while simultaneously in contact with the first semi-finished product **PG2** during cutting, and the thrust of cutting edge **700** has at least one component, along a direction normal to direction **DTR,** that is opposite to a component of the thrust of the other cutting edge **702** (Figures **3****,** **7**).

For this purpose, the two cutting edges **700, 702** are at least partially overlapped to each other (Figures **3****,** **7**).

Still for this purpose, in a top plan view, that is, for example, according to a viewing direction parallel to the axis **Z** of the Figures, or according to a viewing direction perpendicular or however transverse to the surfaces in which the two cutting edges **700, 702** lie, such cutting edges and, possibly, the respective blades **70** intersect with each other (Figures **3****,** **7**).

For this purpose, still according to a top plan view, the two cutting edges **700, 702** form an angle · [alpha] preferably between **5°-120°,** and more preferably between **10°-100°, 60°-95°,** or **70°-90°, 85°-90°,** and for example approximately equal to **90°** (Figures **3****,** **7**).

Such expedients in the arrangement of the two cutting edges **700, 702** cause that a potato or other foodstuff **PG1** to be processed is automatically centered and arranged with respect to the blades **70** in the most favourable position for cutting the caps or other segments thereof, or however is automatically positioned in a desired cutting position.

The cutting station **5** is advantageously provided with a protective case **72** configured for enclosing and isolating the cutting edges **700, 702** during normal operation, preventing an operator from being cut or however injured (Figure **1**).

The preparation device **1** is advantageously provided with a suction system configured for sucking and evacuating the scrap produced by the hollowing station **9** during processing.

Such suction system preferably comprises a suction cap **92,** a suction duct **94,** and a suction pump (not shown).

The suction cap **92** encloses the milling tool **900** and possibly at least part of the first semi-finished piece **PG2** (Figures **2****,****8**).

For this purpose, the suction cap **92** preferably has an internally hollow shape, for example substantially bell-shaped (Figure **8**).

The suction cap **92** is preferably fixed with respect to the bearing frame of the preparation device **1** and/or to the first semi-finished piece **PG2;** in such cases, the cap **92** preferably forms therein a cavity of such shape and dimensions as to allow the milling tool **900** to perform the appropriate lowering and lifting strokes with respect to the first semi-finished piece **PG2.**

The suction cap **92** is preferably arranged at the hollowing station **9.**

The suction duct **94,** comprising for example a flexible tubing, such as made of elastomer or soft synthetic resin, is configured for evacuating from inside the suction cap **92,** for example by suction, the scrap produced by the milling tool **900.**

The milling tool **900** is configured for translating with respect to the suction cap **92,** preferably being lifted and lowered with respect to the cap **92.**

For this purpose, the hollowing station **9** or, more generally, the preparation device **1** can be equipped with a suitable actuator, such as a pneumatic cylinder or a robotic arm, configured for moving the milling tool **900** with respect to the cap **92.**

The hollowing station **9** or, more generally, the preparation device **1** is advantageously provided with a retaining plate **903** configured for being interposed between the first semi-finished piece **PG2** and the suction cap **92** (Figures **2****,** **8**).

The first semi-finished piece **PG2** has a maximum outer diameter **D_extPG** (Figure **5**).

Advantageously, in the retaining plate **903** the hole **905** is obtained, having a diameter **D_Rit** greater than the diameter **D_utMax** of the tool and at the same time lower than the maximum outer diameter **D_extPG** of the first semi-finished piece **PG2** (Figures **8****,** **9**); in this way, when the suction system is activated during the hollowing of the cavity **CF,** the semi-finished piece **PG2** is sucked upward but then immediately rests against the edge of the hole **905;** the retaining plate **903** thus firmly holds the first semi-finished piece **PG2** in place, allowing the tool to hollow it and create the cavity **CF** with high dimensional precision; the expandable grasping body **112** alone, indeed, might not prevent the first semi-finished piece **PG2** from being sucked upward into the suction cap **92,** as it cannot clamp the piece **PG2** too tightly without crushing it.

At the same time, the tool **900** can freely pass through the hole **905.**

The preparation device **1** is advantageously provided with a control system, programmed or otherwise configured for commanding and controlling the automatic operation of the device **1** itself, automatically commanding, for example, one or more of the following elements:
- one or more processing stations **3, 5, 7, 9;**
- the shifts of the workpiece support **11** between the various processing stations **3, 5, 7, 9;**
- the inflation and deflation, or more generally the expansion and contraction, of the expandable grasping body **112,** or more generally the grasping and release of the piece to be processed **PG1, PG2, PG3** by the workpiece support **11;**
- the discharge of caps, segments, or other scrap removed from the semi-finished product **PG1** by the cutting station **5;**
- the activation, deactivation, lifting, lowering, or other movements of the milling tool **900** and more generally of the processing head **90;**
- the movement of the milling tool **900** with respect to the suction cap **92,** and the suction pump which, for example, generates pneumatic depression in the cap **92** and/or the suction duct **94.**

Such control system preferably comprises a logic unit, such as a PLC (Programmable Logic Controller), or other electronic processor or microprocessor circuit, and suitable sensors, for example, end-of-stroke or piece-presence sensors.

An example of a possible operation and use of the previously described preparation device **1** is now described.

An operator can arrange manually, or by an automatic loading system, a potato, or other piece of raw foodstuff to be processed **PG1,** in the locking seat **110** of the workpiece support **11,** which is preferably at the loading station **3;** in particular, the operator can manually insert the potato, or other piece of raw foodstuff to be processed **PG1,** into the locking seat **110** until the piece **PG1** rests against the lower rest element **118,** bringing the heights **HL1** and **HL2** to the desired values.
Then, for example, by pressing a button, turning a knob or lever, or due to a presence detector, the operator can start an automatic processing process commanded by the above-mentioned logic unit.

In such automatic processing process, the expandable grasping body **112** can be expanded inward in the locking seat **110** to restrict it and grasp and lock the potato **PG1** to be processed in place, preferably making it integral with the workpiece support **11.**

The positioning system can then translate the workpiece support **11** and the potato loaded on it along the direction **DTR** to bring it at the cutting station **5.**

Continuing its stroke, the workpiece support pushes the potato **PG1** against the blades **70,** which cut away a lower cap and an upper cap, or other segment, thus obtaining the semi-finished piece **PG2,** which has a base and a top preferably formed by flat faces but does not have the filling cavity **CF.**

The two caps cut away from the potato **PG1** can be allowed to fall into appropriate trays **13** (Figure **1**) or other collecting containers.

For this purpose, the preparation device **1** can be provided with suitable fixed or movable deflectors, i.e., moved for example by pneumatic or electric actuators, not shown, and made for example as simple metal sheet flaps inclined with respect to the advancement direction **DTR** of the potato **PG1,** in order to deflect them, by pushing them sideways, in a direction perpendicular or transverse to the advancement direction **DTR** of the potato **PG1** and the workpiece support **11.**

Such deflectors are advantageously arranged at the cutting station **5.**

The deflectors are preferably enclosed within the case **72.**

Still continuing their stroke, driven by the positioning system, the workpiece support **11** and the semi-finished piece **PG2** reach the hollowing station **9,** where they can stop in a predetermined processing position, preferably below the suction cap **92** or, more generally, in a position that intersects the strokes of the milling tool **900.**

The suction cap **92** preferably isolates the semi-finished piece **PG2** from the external atmosphere, facilitating the creation of a pneumatic depression inside the cap **92** itself.

The suction pump can then be activated, along with the milling tool **900.**

The latter can be lowered to hollow out the filling cavity **CF** in the semi-finished potato **PG2,** while the pump suctions the potato shavings and other scrap produced by the milling tool **900,** removing them from inside the cap **92** to the outside, for example through the flexible tube or other duct **94.**

Once this final processing step is completed, the milling tool **900** can be lifted again or otherwise moved away from the semi-finished piece **PG3.**

The workpiece support **11** and the semi-finished piece **PG3** can then be moved again, preferably moved by the positioning system, for example to the loading station **3,** which can coincide for example with the unloading station **7.**

There, the expandable grasping body **112** can deflate or otherwise expand radially, and the possible lower rest element **118** can be shifted for example laterally, freeing the semi-finished potato **PG3** and allowing it to fall out of the locking seat **110.**

For this purpose, the preparation device **1** can be provided with a pneumatic cylinder or other linear or non-linear actuator configured for driving such lateral shifting of the lower rest element **118.**

The processing cycle of the preparation device **1** can then restart and repeat.

The second piece of potato or other semi-finished foodstuff **PG3** can then be filled with a suitable stuffing and/or cooked, completing the desired dish.

In such a case, therefore, the loading **3** and unloading **7** stations coincide, simplifying the construction of the machine **1.**

The preparation device **1** as previously described allows a very fast preparation of pieces of semi-finished potato **PG3** provided with a filling cavity with a shape more suitable and optimized for containing stuffing, e.g., compared to a simple cut made with a knife, and with tighter and more precise shape tolerances than manually hollowed semi-finished products, for example with a knife or a spoon with cutting edges.

The faster preparation of semi-finished pieces allows for much quicker preparation and serving of portions of *baked potatoes, jacket potatoes,* or similar stuffed potatoes or other stuffed vegetables, fruits, or mushrooms, significantly increasing the productivity and profitability of a commercial business, whether it be a permanent establishment or a mobile sales point.

The reduced variability in shape and dimensions of semi-finished potatoes **PG3** from one piece to another allows for a more consistent amount of stuffing or other filling in the portion of the final dish or other food preparation, reducing customer complaints and dissatisfaction, and making it easier to manage large-scale dish preparation and cost control, while also significantly reducing processing waste, for example, but not limited to, the number of dishes unfit to be served because the semi-finished potato **PG3,** hollowed with an excessively large filling cavity **CF,** breaks during cooking due to insufficient structural strength.

The reduced variability in shape and dimensions of the semi-finished potatoes **PG3** from one piece to another further allows stuffing with semi-automatic dosing machines with a constant dose.

The preparation device **1** lends itself to be manufactured by relatively simple technologies and with relatively low bulk and cost.

The exemplary embodiments described above are susceptible to various modifications and variations without departing from the scope of protection of the present invention.

For example, the milling tool **900** can be replaced by a helical tip, a turning tool, or other chip-removal processing tool.

The above-mentioned logic unit can comprise or be formed not only by a microprocessor circuit but also, for example, by a relay circuit and/or a set of electropneumatic valves.

A preparation device according to the present invention can be provided not only with one but also with multiple workpiece supports **11.**

Each workpiece support **11** can form not only one but also multiple locking seats **110.**

The moving system of the milling tool can also be configured for translating the tool itself along a direction perpendicular or however transverse to the milling axis **AXF,** so as to create an elongated cavity when processing large potatoes.

The retaining plate **903** can be replaced by a grid, an appropriate frame, or other rest structure capable of resting against the first semi-finished piece **PG2,** preventing it from slipping out of the locking seat **110.**

The unloading station **7** can also be a processing station distinct from the loading station **3** and can be arranged, for example, downstream of the hollowing station **9,** on the opposite side from the loading station **3.**

Any reference in this description to "an embodiment," "an exemplary embodiment," means that a particular feature or structure described in relation to such embodiment is comprised in at least one embodiment of the invention, and particularly in a particular variant of the invention as defined in a main claim.

The fact that such expressions appear in various parts of the description does not imply that they necessarily refer only to the same embodiment.

Furthermore, when a feature, element, or structure is described in relation to a particular embodiment, it is observed that it is within the abilities of a person skilled in the art to apply such feature, element, or structure to other embodiments.

Numerical references that differ only by different suffixes, e.g., **21', 21", 21**^{III}, unless otherwise specified, indicate different variants of an element referred to by the same manner.

Furthermore, all details are replaceable by technically equivalent elements.

For example, the materials used, as well as the dimensions, can be any depending on the technical requirements.

It should be understood that an expression such as "A *comprises* B, C, D" or "A *is formed by* B, C, D" also comprises and describes the particular case in which "A *consists of* B, C, D".

The expression *"A comprises an element B,"* unless otherwise specified, is to be understood as *"A comprises one or more elements B".*

References to a "first, second, third, ..., n-th entity" are solely intended to distinguish them from each other, but the mention of the n-th entity does not necessarily imply the existence of the first, second, ..., (n-1)th entity.

The examples and lists of possible variants in the present application are to be understood as non-exhaustive list.

## Claims

1. Preparation device (**1**) for preparing foods to be stuffed such as potatoes or other vegetables, fruits or mushrooms, comprising:
- a positioning system configured for grasping and holding in place a piece of a raw foodstuff to be processed (**PG1**);
- a processing head (**90**) configured for obtaining in the piece of raw foodstuff to be processed (**PG1**) grasped by the positioning system, by chip removal, a filling cavity (**CF**) configured for containing a stuffing.

2. Device according to claim **1**, wherein the processing head (**90**) is configured for obtaining the filling cavity by performing one or more of the following processing operations: milling, drilling for example by means of a helical tip, turning.

3. Device according to claim **1** or **2**, comprising two or more predetermined processing stations (**3, 5, 7, 9**) and a workpiece support (**11**) configured for grasping and holding in one or more predetermined positions the piece of a raw foodstuff to be processed (**PG1**) or other semi-finished pieces of foodstuff (**PG2**, **PG3**) obtained therefrom and bringing them in the two or more predetermined processing stations (**3, 5, 7, 9**).

4. Device according to claim **3,** wherein the two or more predetermined processing stations comprise one or more of the following stations: a loading station (**3**), a cutting station (**5**), a hollowing station (**9**), and wherein:
- in the loading station (**3**) the piece of a raw foodstuff to be processed (**PG1**) can be loaded on the workpiece support (**11**) and/or grasped and held by it in a predetermined position;
- in the cutting station (**5**) the preparation device (**1**) is configured for removing one or more caps or other segments from the piece of a raw foodstuff to be processed (**PG1**) grasped by the workpiece support (**11**);
- in the hollowing station (**9**) the preparation device (**1**) is configured for hollowing out a filling cavity (**CF**) in the piece of a raw foodstuff to be processed or in a semi-finished foodstuff (P**G**2) derived therefrom which have been grasped by the workpiece support (**11**).

5. Device according to claim **3** or **4**, wherein the workpiece support (**11**) comprises a locking seat (**110**) configured for receiving the piece of raw foodstuff to be processed (**PG1**) or a piece of semi-finished foodstuff (**PG2**, **PG3**) obtained from said piece of semi-finished raw foodstuff (**PG1**) and keeping it in a predetermined position, wherein the locking seat (**110**) forms an internal cavity and comprises an expandable grasping body **(112)** configured for reversibly enlarging or reducing said internal cavity so as to respectively release and grasp said piece of raw foodstuff to be processed **(PG1)** or said piece of semi-finished foodstuff **(PG2, PG3).**

6. Device according to claim **5,** wherein the expandable grasping body **(112)** can be reversibly inflated and deflated.

7. Device according to one or more of the preceding claims, comprising one or more cutting edges **(700, 702)** each configured for cutting away a lower and/or upper cap or other segment of the piece of raw foodstuff to be processed **(PG1)** or said piece of semi-finished foodstuff **(PG2, PG3)** obtained from said piece of raw foodstuff to be processed **(PG1).**

8. Device according to claim **7,** comprising at least two cutting edges **(700, 702)** each of which is configured for cutting away a lower and/or upper cap or other segment of the piece of raw foodstuff to be processed **(PG1)** or said piece of semi-finished foodstuff **(PG2, PG3)** obtained from said piece of raw foodstuff to be processed **(PG1),** wherein the two cutting edges **(700, 702)** are arranged:
- one higher than the other; and/or
- one at least partly superimposed on the other; and/or
- separated by a distance **(HP),** measured in a plane perpendicular to the translation direction **(DTR)** according to which the two cutting edges **(700, 702)** penetrate in said piece of raw foodstuff to be processed **(PG1)** or said piece of semi-finished foodstuff **(PG2, PG3)** cutting it.

9. Device according to claim **7** or **8,** comprising at least two cutting edges **(700, 702)** each of which is configured for cutting away a lower and/or upper cap or other segment of the piece of raw foodstuff to be processed **(PG1)** or said piece of semi-finished foodstuff **(PG2, PG3)** obtained from said piece of raw foodstuff to be processed **(PG1),** wherein the two cutting edges are provided so as to apply each a thrust that is transverse but not perpendicular to the translation direction **(DTR)** of the cutting edges with respect to the piece of semi-finished foodstuff **(PG2)** while they are simultaneously in contact with said piece of semi-finished foodstuff **(PG2)** while they are cutting it, and the thrusts of the two cutting edges **(700, 702)** on said piece of semi-finished foodstuff **(PG2)** have components, according to directions perpendicular to said translation direction **(DTR)** of the cutting edges **(700, 702),** opposite to each other.

10. Device according to one or more of the preceding claims, comprising a suction system configured for sucking and evacuating the chips or other scrap produced by the processing head **(90).**

11. Device according to claim **10,** wherein the suction system comprises a suction cap **(92)** configured for enclosing the milling, drilling or turning tool **(900)** and possibly at least part of the piece of semi-finished foodstuff **(PG2)** on which said tool is acting.

12. Process for preparing foods to be stuffed such as potatoes or other vegetables, fruits or mushrooms, comprising the following operations:
- providing a workpiece support **(11)** and a processing head **(90);**
- grasping through the workpiece support **(11)** a piece of a raw foodstuff to be processed **(PG1)** or a piece of semi-finished foodstuff **(PG2, PG3)** obtained from said piece of a raw foodstuff to be processed **(PG1);**
- through the processing head **(90),** making in said piece of a raw foodstuff to be processed **(PG1)** or said piece of semi-finished foodstuff **(PG2, PG3)** a filling cavity **(CF)** configured for containing a stuffing.

13. Process according to claim **12,** comprising the following operations:
- providing two or more predetermined processing stations **(3, 5, 7, 9);**
- shifting from one of said processing stations **(3, 5, 7, 9)** to another of said processing stations **(3, 5, 7, 9)** the workpiece support **(11)** and said piece of a raw foodstuff to be processed **(PG1)** or said piece of semi-finished foodstuff **(PG2, PG3)** fixed to said workpiece support **(11).**

14. Process according to claim **12** or **13,** wherein the processing head **(90)** is provided with a milling tool **(900),** and the process comprises the operation of making said filling cavity **(CF)** by rotating said milling tool on itself at a rotation speed comprised between **6000-8000** revolutions per minute.

15. Process according to one or more of claims **12** to **14,** comprising the following operations:
- removing a lower cap or other segment of the piece of raw foodstuff to be processed **(PG1)** or of the piece of semi-finished foodstuff **(PG2, PG3)** obtained from said piece of raw foodstuff to be processed **(PG1),** forming on the piece of raw foodstuff to be processed **(PG1)** or on the piece of semi-finished foodstuff **(PG2, PG3)** obtained from said piece of raw foodstuff to be processed **(PG1)** a flat rest surface configured for vertically arranging the piece of raw foodstuff to be processed **(PG1),** the piece of semi-finished foodstuff **(PG2, PG3)** obtained from said piece of raw foodstuff to be processed **(PG1)** or the stuffed food obtained from said piece of raw foodstuff to be processed **(PG1)** or from said piece of semi-finished foodstuff **(PG2, PG3)** obtained from said piece of raw foodstuff to be processed **(PG1).**

16. Process according to one or more claims from **12** to **15,** wherein said piece of a raw foodstuff to be processed **(PG1)** is a piece of a potato, of a root vegetable, of an aubergine, of a vegetable, of a fruit, of a mushroom.
